# EUROPEAN PATENT SPECIFICATION

(11) **EP 0 286 338 B1**
(45) Date of publication and mention of the grant of the patent: **05.05.1993**
(21) Application number: 88302981.1
(22) Date of filing: 31.03.1988
(51) Int. Cl.: G02F 1/35

(54) **Radiation pulse generation**
Strahlungspuls-Generator
Génération pulsée de radiations

(30) Priority: 06.04.1987 GB 8708148
(43) Date of publication of application: 12.10.1988
(73) Proprietor: BRITISH TELECOMMUNICATIONS public limited company, London EC1A 7AJ (GB)
(72) Inventor: Taylor, James Roy, Kilburn London, NW6 6ED (GB); Gomes, Anderson Stevens Leonidas, Recife S07 30 PE (BR); Gouveia-Neto, Artur da Silva, Maceio-57000 AL (BR)
(74) Representative: Pratt, David Martin

(56) References cited:
- CONFERENCE ON LASERS AND ELECTRO-OPTICS, Baltimore, Maryland, 21st-24th May 1985, pages 80-81, abstract WE1, OSA/IEEE, US; L.F. MOLLENAUER et al.: "Experimental demonstration of soliton propagation in long fibers: loss compensated by Raman gain"
- IEEE JOURNAL OF QUANTUM ELECTRONICS, vol. QE-22, no. 12, December 1986, pages 2242-2250, IEEE, New York, US; F.M. MITSCHKE et al.: "Stabilizing the soliton laser"
- IEEE JOURNAL OF QUANTUM ELECTRONICS, vol. QE-11, no. 3, March 1975, pages 100-103, New York, US; R.H. STOLEN: "Phase-matched-stimulated four-photon mixing in silica-fiber waveguides"
- SOVIET PHYSICS JETP, vol. 62, no. 3, September 1985, pages 448-455, American Institute of Physics, New York, US; E.M. DIANOV et al.: "Generation of ultrashort pulses by spectral filtering during stimulated Raman scattering in an optical fiber

## Description

The invention relates to apparatus and methods for generating optical pulses.

In the field of optical communications, there is a continuing need to compress optical pulses from those generated by conventional lasers which typically have durations in the order of 100ps.

In a paper entitled "Fibre Raman Soliton Laser Pumped by a Nd:YAG laser" Optics Letters, vol 12, no. 3, March 1987 pp 181-183, a completely integrated oscillator loop is disclosed which is pumped with 100ps pulses and provides output pulses as a result of Raman scattering in an optical fibre with pulse widths in the order of 190fs. One of the drawbacks of this system is the need for an optical loop of closely controlled length and the additional complications of providing feedback.

The present invention provides an optical pulse generator for generating optical pulses, a monomode optical fibre into which optical pulses from the pulse generator are coupled, the optical pulse generator and the length and cross-section of the monomode optical fibre being such that the optical pulses undergo Raman scattering within the monomode optical fibre to generate reduced width pulses with wavelengths lying within a Raman spectrum, and filtering means into which the reduced width pulses are coupled for selecting reduced width pulses within a desired wavelength band, the monomode optical fibre comprising a non-linear medium which supports non-linear solitary waves within the Raman spectrum, characterized in that the filtering means comprises a first filter and first and second additional monomode optical fibres downstream of the first filter, pulses from the monomode optical fibre being coupled into the first filter which is adapted to pass at least some of the Raman wavelengths but to reject the wavelength of the original pulses from the optical pulse generator, the first additional monomode optical fibre having a dispersion characteristic such that the group velocity of the Raman pulses due to self phase modulation gives rise to a positive frequency chirp, and the second additional monomode optical fibre having a negatively dispersive element, whereby the reduced width pulses are caused to undergo Raman scattering whereby the pulse widths are compressed.

The invention also provides a method of generating optical pulses, the method comprising coupling first optical pulses into a monomode optical fibre, the monomode optical fibre causing the first pulses to undergo Raman scattering to generate reduced width pulses with wavelengths lying within a Raman spectrum, and passing the reduced width pulses into filtering means to select those reduced width pulses which have wavelengths lying within a desired wavelength band, the monomode optical fibre comprising a non-linear medium which supports non-linear solitary waves within the Raman spectrum, and the filtering means comprising a first filter and first and second additional monomode optical fibres downstream of the first filter, pulses from the monomode optical fibre being coupled into the first filter which is adapted to pass at least some of the Raman wavelengths but to reject the wavelength of the original pulses from the optical pulse generator, the first additional monomode optical fibre having a dispersion characteristic such that the group velocity of the Raman pulses due to self phase modulation gives rise to a positive frequency chirp, and the second additional monomode optical fibre having a negatively dispersive element, whereby the reduced width pulses are caused to undergo Raman scattering whereby the pulse widths are compressed.

We have discovered surprisingly that pulses with wavelengths within the Raman spectrum have a high degree of coherence so that the phases of the different frequency components are substantially mode locked. Thus in real time the Raman pulse width is given approximately by the inverse of the spectral width. Furthermore, the pulses are extremely stable which is a consequence of the fact that they are non-linear solitary waves which have been amplified and compressed in the generation process.

In contrast to the known arrangement for pulse width reduction described above, our system is a single pass system without feedback thus simplifying the overall structure. Furthermore, in our system, unlike the known system, it is possible to select pulses with a desired wavelength. The advantage of a single pass system is that the optical pulse generator can produce an arbitrary sequence of pulses, whereas in the previous case the pulses must be generated at a closely controlled frequency.

The monomode optical fibre comprises a non-linear medium in order to cause the incoming pulses to undergo Raman scattering, and conveniently the medium should have a broad Raman gain spectrum. The medium should support non-linear solitary waves at the wavelengths within the Raman spectrum.

Preferably, the continuous wave is unstable with respect to the formation of side bands at wavelengths shorter than the Raman gain peak. This condition leads to a lowering of the threshold for the Raman process to begin thus enabling lower power sources to be used.

Conveniently, the monomode optical fibres are silica optical fibres. In this case, the optical pulse generator conveniently comprises a laser such as Nd:YAG laser.

In this context, the term "optical" is intended to refer to that part of the electromagnetic spectrum which is generally known as the visible region together with those parts of the infrared and ultraviolet regions at each end of the visible region which are capable of being transmitted by dielectric optical waveguides such as optical fibres.

An example of an assembly and method for generating optical pulses in accordance with the present invention will be described with reference to the accompanying drawings, in which:-
Figure 1 is a block diagram of the optical pulse generating assembly;
Figure 2 illustrates an experimental arrangement to demonstrate the invention;
Figure 3 illustrates graphically the background free autocorrelation of the soliton-Raman pulses exiting fibre F₁ in Figure 2;
Figure 4 illustrates optimisation curves of fibre length F₃ in the fibre compressor, with F₂ fixed at 2m, for fibre lengths F₁ of 500m and 300m which represent different input pulse widths to the compressor of 180fs and 130fs respectively; and,
Figure 5 illustrates autocorrelation traces of (a) 130fs pulse exiting fibre F₁, (b) 520fs pulse exiting fibre F₂, and (c) overall compressed pulse of 65fs exiting F₃.

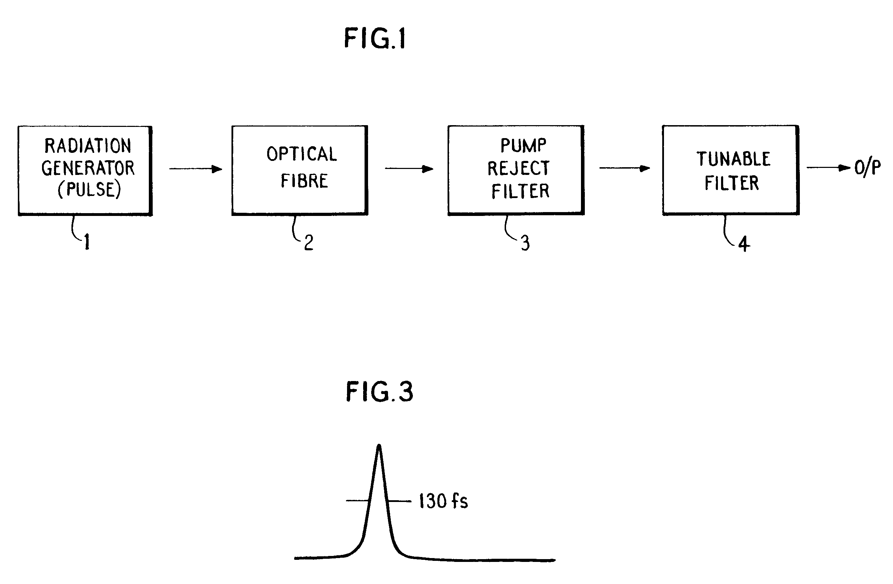

Figure 1 illustrates an optical pulse generator 1 such as a cw mode locked Nd:YAG laser which generates optical pulses with a wavelength of 1.32µm, each having a pulse width of 90ps at a 100 MHz repetition rate, with an average power of 1.8W. The pulses from the laser 1 are coupled into a monomode optical fibre 2 which has an anomalous dispersion at and above 1.32µm. The stimulated Raman spectrum in a glass matrix is broad (approximately 100nm) with a wavelength shift of about 440cm⁻¹. The result of Raman scattering within the optical fibre 2 is the generation of optical pulses having much narrower pulse widths, of the order 130fs. These narrowed pulses are coupled into a first optical filter 3 which filters out the original pump wavelengths from the laser 1 and the filtered, narrow pulses are coupled into a second, tunable filter 4 which has a bandwidth smaller than the width of the Raman spectrum and a centre wavelength tunable over the range of the Raman spectrum. Thus, the output pulse wavelength can be selected by suitably tuning the filter 4.

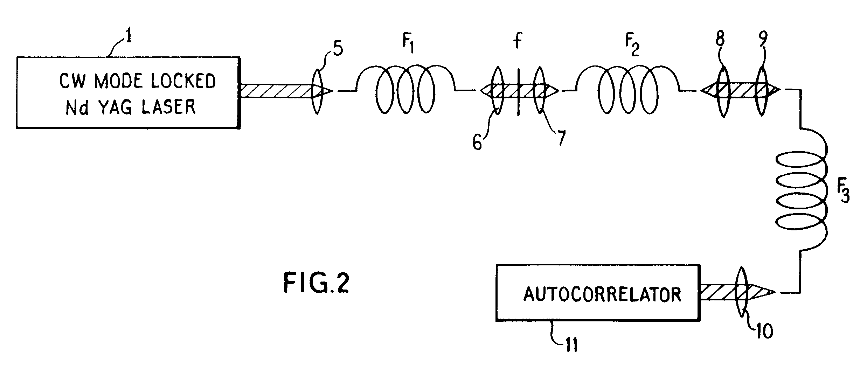

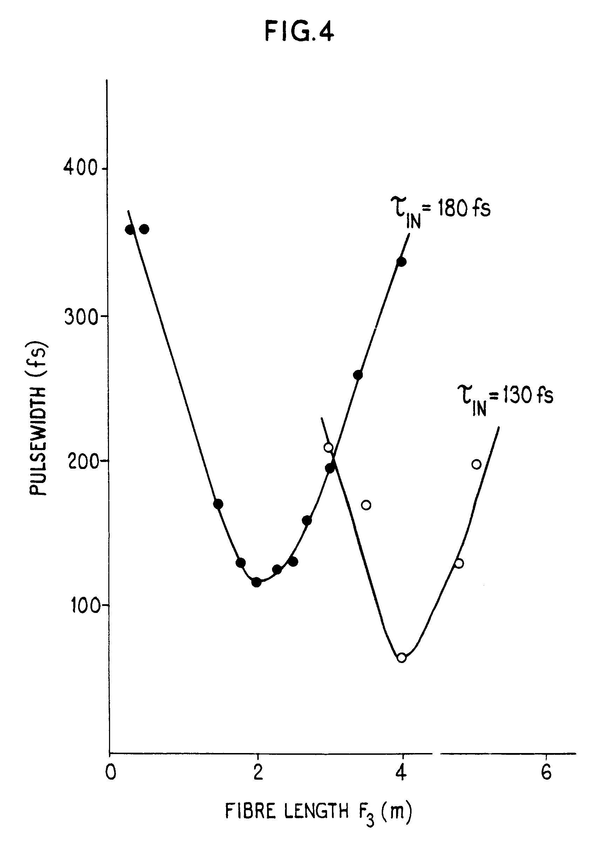

Figure 2 illustrates in more detail an arrangement similar to that shown in Figure 1 but adapted for experimental use. The output pulses from the laser 1 are coupled, using an uncoated X20 microscope objective 5, with 50% efficiency, into a standard single mode at 1.32µm, non-polarisation preserving optical fibre (F₁), which has a dispersion minimum in the region of 1.32µm. Through multisoliton-Raman generation, highly temporally compressed, stable trains of pulses are generated with a bandwidth extending from just above 1.32µm to beyond 1.45µm. The generated soliton-Raman pulsewidth is a function of the fibre length and peak pump pulse power for a fixed pump pulsewidth. Typically for a 300m fibre (F₁) length, with 800mW average pump power, 130fs pulses with high amplitude stability (<1% fluctuation) and 400mW average power in the Raman band are generated. Figure 3 shows a "real time" trace of a scanning background free autocorrelation trace taken over a long exposure time, clearly indicating the high stability of the 130fs soliton Raman pulses.

A non-soliton component of the compressed pulse is dependent on the experimental parameters of fibre length and pump power. For the case of F₁ ∼ 300m, only 10% of the output energy was in the 130fs soliton pulse, corresponding to a peak power of about 3kW. By using polarisation selection however, it is possible to reach the situation where the broad non-soliton component can be rejected.

Radiation from the fibre F₁ is coupled via a lens 6 into a filter (f) which removes the fundamental (pump) radiation. The transmitted soliton-Raman signal is focussed by a lens 7 into a fibre F₂, the first stage of an all fibre compressor. This fibre F₂ is non-polarisation preserving single mode at 1.32µm with an effective 6µm core diameter, a loss of <1dB/Km and a dispersion minimum wavelength at 1.55µm. At 1.4µm the group velocity dispersion due to self phase modulation gives rise to a positive frequency chirp, as in the case of a conventional fibre-grating pair compressor.

The compressor has a negatively dispersive element, formed by a fibre F₃, which is again non-polarisation preserving, single mode at 1.32µm, with a core diameter of 9µm, a dispersion of -11ps/km.nm at 1.4µm and a zero dispersion wavelength at 1.275µm.

Coupling into and out of the fibres F₂,F₃ is achieved using uncoated microscope objectives 8,9,10 and the pulsewidth on exit from the fibre F₃ is examined using a background free autocorrelator 11, with a temporal resolution of better than 20fs. An overall average power coupling efficiency for each stage (fibre and microscope objectives) of approximately 25% is typical.

For fixed input parameters of peak power, and pulsewidth there exists for any particular wavelength an optimum fibre length Zₒₚₜ of fibre F₂ to achieve maximum compression in the compressor. For our particular fibre parameters and input pulses a fibre length of 0.5m was predicted, and a compression ratio of times two. Experimentally, with a fibre length F₂ of less than 1m very little overall compression could be achieved. It was found empirically that in the situations where the input pulse experienced a temporal broadening of approximately 3 to 4 times then compression could be achieved. For a fibre length F₂ of 3m the required broadening was obtained. In determining the optimum theoretical fibre length of a fibre compressor it is assumed that the pulses entering the system are transform limited. However in the case of the single pass soliton-Raman pulses, this situation is far from being observed and an obvious chirp exists on the pulse. In the case of Raman generation the form of the chirp can take quite a complicated form, and a fibre length different from the theoretical optimum would be expected.

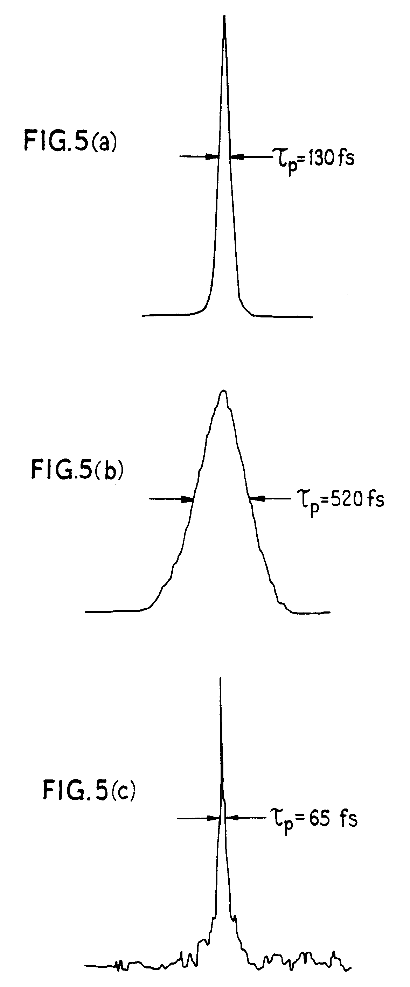

The degree of group delay required to compress the chirped pulses exiting fibre F₂ was also determined experimentally. Theoretically the compression would require diffraction grating separations of several millimetres, which is equivalent in dispersion to a fibre length of the order of a meter. The optimisation was carried out as a "cut back" experiment on fibre F₃ initially several meters long, for several input pulse parameters. The result of this can be seen in Figure 4. For a fibre length F₁ of 50µm, the soliton Raman pulsewidth was 180fs at an average pump power level of 700mW. Fibre F₂ was maintained at 3m and at a fibre length F₃ of 2m a minimum in the overall compressed pulsewidth of 120fs was obtained. Above and below this length for fibre F₃ overall compression width increased. Similarly, with F₁ at 300m, the soliton Raman pulsewidth was 130fs and F₃ optimised around 4m, with an average power in the pulses of 40mW. Figure 5 shows the autocorrelation traces obtained at each stage of the compression process. The soliton Raman pulse of 130fs is shown in Figure 5(a) which broadened to 520fs (Figure 5(b)) in 3m of fibre F₂, while figure 5(c) shows the autocorrelation of the finally compressed 65fs pulse representing an overall compression of times two. However not all the average power was contained in the compressed pulse. The original pedestal on the input soliton pulse was in evidence, and the compressed pulse contained only ∼10% of the average power, which represents a peak power in the 65fs pulse of 1kW.

## Claims

1. An optical pulse generating assembly comprising an optical pulse generator (1) for generating optical pulses, a monomode optical fibre (F₁) into which optical pulses from the pulse generator are coupled, the optical pulse generator and the length and cross-section of the monomode optical fibre being such that the optical pulses undergo Raman scattering within the monomode optical fibre to generate reduced width pulses with wavelengths lying within a Raman spectrum, and filtering means (f, F₂ and F₃) into which the reduced width pulses are coupled for selecting reduced width pulses within a desired wavelength band, the monomode optical fibre comprising a non-linear medium which supports non-linear solitary waves within the Raman spectrum, characterized in that the filtering means comprises a first filter (f) and first and second additional monomode optical fibres (F₂ and F₃) downstream of the first filter, pulses from the monomode optical fibre (F₁) being coupled into the first filter (f) which is adapted to pass at least some of the Raman wavelengths but to reject the wavelength of the original pulses from the optical pulse generator, the first additional monomode optical fibre (F2) having a dispersion characteristic such that the group velocity of the Raman pulses due to self phase modulation gives rise to a positive frequency chirp, and the second additional monomode optical fibre (F3) having a negatively dispersive element, whereby the reduced width pulses are caused to undergo Raman scattering whereby the pulse widths are compressed.

2. An assembly according to claim 1, wherein the optical pulses from the optical pulse generator (1) have a pulse width of the order of pico seconds, and the reduced width pulses have widths of the order of femto seconds.

3. A method of generating optical pulses, the method comprising coupling first optical pulses into a monomode optical fibre (2), the monomode optical fibre causing the first pulses to undergo Raman scattering to generate reduced width pulses with wavelengths lying within a Raman spectrum, and passing the reduced width pulses into filtering means to select those reduced width pulses which have wavelengths lying within a desired wavelength band, the monomode optical fibre comprising a non-linear medium which supports non-linear solitary waves within the Raman spectrum, and the filtering means comprising a first filter (f) and first and second additional monomode optical fibres (F₂ and F₃) downstream of the first filter, pulses from the monomode optical fibre being coupled into the first filter which is adapted to pass at least some of the Raman wavelengths but to reject the wavelength of the original pulses from the optical pulse generator, the first additional monomode optical fibre (F2) having a dispersion characteristic such that the group velocity of the Raman pulses due to self phase modulation gives rise to a positive frequency chirp, and the second additional monomode optical fibre (F3) having a negatively dispersive element, whereby the reduced width pulses are caused to undergo Raman scattering whereby the pulse widths are compressed.

## Patentansprüche

1. Optische impulserzeugende Vorrichtung die aufweist:
einen optischen Impulsgenerator (1) zum Erzeugen optischer Impulse, eine optische Monomodefaser (F₁) in welche die optischen Impulse vom Impulsgenerator gekoppelt werden, wobei der optische Impulsgenerator, die Länge und der Querschnitt der optischen Monomodefaser so sind, daß die optischen Impulse eine Raman-Streuung innerhalb der optischen Monomodefaser unterlaufen, um breitenreduzierte Impulse mit Wellenlängen, die innerhalb des Raman-Spektrums liegen zu erzeugen; und Filterreinrichtungen (f, F₂ und F₃), in welche die breitenreduzierten Impulse gekoppelt werden, um breitenreduzierte Impulse innerhalb des gewünschten Wellenlängenbandes zu selektieren, wobei die optische Monomodefaser ein nichtlineares Medium aufweist, das nichtlineare Einzelwellen innerhalb des Raman-Spektrums unterstützt,
**dadurch gekennzeichnet,** daß
die Filtereinrichtungen einen ersten Filter (f) sowie erste und zweite zusätzliche optische Monomodefasern (F₂ und F₃), die dem ersten Filter nachgeschaltet sind, aufweisen, wobei Impulse von der optischen Monomodefaser (F₁) in den ersten Filter (f) gekoppelt werden, der angepaßt ist mindestens einige der Raman-Wellenlängen passieren zu lasen, aber Wellenlängen der ursprünglichen Impulse des optischen Impulsgenerators zurückzuweisen, wobei die erste zusätzliche optische Monomodefaser (F2) eine Dispersionscharakteristik aufweist, so daß die Gruppengeschwindigkeit des Raman-Impulses aufgrund der Eigenphasenmodulation ein positives Frequenzzwitschern hertvorruft, und wobei die zweite zusätzliche optische Monomodefaser (F3) ein negativ dispersives Element aufweist, wodurch die breitenreduzierten Impulse veranlaßt werden, eine Raman-Streuung zu unterlaufen, wodurch die Impulsbreiten Komprimiert werden.

2. Ein Aufbau entsprechend Anspruch 1, in welchem die optischen Impulse vom optischen Impulsgenerator (1) eine Impulsbreite der Größenordnung von Picosekunden und die breitenreduzierten Impulse eine Breite in der Größenordnung von Femtosekunden aufweisen.

3. Ein Verfahren zur Erzeugung optischer Impulse, wobei das Verfahren ein Koppeln erster optischer Impulse in eine optische Monomodefaser (2) aufweist, wobei die optische Monomodefaser die ersten Impulse dazu veranlaßt, eine Raman-Streuung zu unterlaufen, um breitenreduzierte Impulse mit Wellenlängen, die innerhalb des Raman-Spektrums liegen zu erzeugen, und ein Einleiten der breitenreduzierten Impulse in Filtereinrichtungen, um die breitenreduzierten Impulse, die Wellenlängen innerhalb des gewünschten Wellenlängenbandes aufweisen zu selektieren, wobei die optische Monomodefaser ein nichtlineares Medium aufweist, das nichtlineare Einzelwellen innerhalb des Raman-Spektrums unterstüzt, und wobei die Filtereinrichtungen ein erstes Filter (f) sowie erste und zweite zusätzliche optische Monomodefasern (F2 und F3), die dem ersten Filter nachgeschaltet sind, aufweisen, wobei Impulse aus der optischen Monomodefaser in des erste Filter gekoppelt werden, das angepaßt ist zumindestens einige der Raman-Wellenlängen passieren zu lassen, aber Wellenlängen des ursprünglichen Impulses des optischen Pulsgenerators zu unterdrücken, wobei die erste zusätzliche optische Monomodefaser (F2) eine Dispersionscharakteristik aufweist, so daß die Gruppengeschwindigkeit des Raman-Impulses aufgrund der Eigenphasenmodulation ein positives Frequenzzwitschern hervorruft, und wobei die zweite zusätzliche optische Monomodefaser (F3) ein negativ dispersives Element besitzt, wodurch die breitenreduzierten Impulse dazu veranlaßt werden, eine Raman-Streuung zu unterlaufen, wodurch die Impulsbreiten komprimiert werden.

## Revendications

1. Un ensemble de génération d'impulsions optiques comprenant un générateur (1) d'impulsions optiques destiné à engendrer des impulsions optiques, une fibre optique monomode (F₁) dans laquelle sont couplées des impulsions optiques provenant du générateur d'impulsions, le générateur d'impulsions optiques ainsi que la longueur et la section transversale de la fibre optique monomode étant tels que les impulsions optiques sont soumises à une dispersion de Raman à l'intérieur de la fibre optique monomode afin d'engendrer des impulsions d'une largeur réduite dont les longueurs d'ondes sont situées à l'intérieur d'un spectre de Raman, et un moyen filtrant (f, F₂ et F₃) dans lequel les impulsions à largeur réduite sont couplées pour choisir des impulsions à largeur réduite situées à l'intérieur d'une bande souhaitée de longueurs d'ondes, la fibre optique monomode comprenant un milieu non linéaire qui supporte des ondes solitaires non linéaires à l'intérieur du spectre de Raman, caractérisé en ce que le moyen filtrant comprend un premier filtre (f) et une première et une deuxième fibres optiques monomodes additionnelles (F₂ et F₃) en aval du premier filtre, des impulsions provenant de la fibre optique monomode (F₁) étant couplées dans le premier filtre (f) qui est apte à laisser passer au moins certaines des longueurs d'ondes de Raman mais à rejeter la longueur d'onde des impulsions d'origine provenant du générateur d'impulsions optiques, la première fibre optique monomode additionnelle (F₂) présentant une caractéristique de dispersion telle que la vitesse de groupe des impulsions de Raman dues à une modulation de phase autonome donne naissance à une compression positive des impulsions de fréquence et la deuxième fibre optique monomode additionnelle (F₃) présentant un élément négativement dispersant, grâce à quoi les impulsions à largeur réduite sont amenées à être soumises à une dispersion de Raman sous l'effet de laquelle les largeurs d'impulsions sont comprimées.

2. Un ensemble selon la revendication 1, dans lequel la largeur d'impulsion des impulsions optiques provenant du générateur (1) d'impulsions optiques est de l'ordre des picosecondes et les largeurs des impulsions à largeur réduite sont de l'ordre des femtosecondes.

3. Un procédé de génération d'impulsions optiques, le procédé comprenant les étapes consistant à coupler des premières impulsions optiques dans une fibre optique monomode (2), la fibre optique monomode (2) amenant les premières impulsions à être soumises à une dispersion de Raman afin d'engendrer des impulsions de largeurs optiques réduites dont les longueurs d'ondes sont situées à l'intérieur d'un spectre de Raman et à laisser passer dans un moyen filtrant les impulsions de largeur réduite afin de choisir les impulsions de largeur réduite dont les longueurs d'ondes sont situées à l'intérieur d'une bande souhaitée de longueurs d'ondes, la fibre optique monomode comprenant un milieu non linéaire qui supporte des ondes solitaires non linéaires à l'intérieur du spectre de Raman, le moyen filtrant comprenant un premier filtre (f) et une première et une deuxième fibres optiques monomodes additionnelles (F₂ et F₃) en aval du premier filtre, des impulsions provenant de la fibre optique monomode (F₁) étant couplées dans le premier filtre (f) qui est apte à laisser passer au moins certaines des longueurs d'ondes de Raman mais à rejeter la longueur d'onde des impulsions d'origine provenant du générateur d'impulsions optiques, la première fibre optique monomode additionnelle (F₂) présentant une caractéristique de dispersion telle que la vitesse de groupe des impulsions de Raman dues à une modulation de phase autonome donne naissance à une compression positive des impulsions de fréquence et la deuxième fibre optique monomode additionnelle (F₃) présentant un élément négativement dispersant, grâce à quoi les impulsions à largeur réduite sont amenées à être soumises à une dispersion de Raman sous l'effet de laquelle les largeurs d'impulsions sont comprimées.
